# EUROPÄISCHE PATENTSCHRIFT

(11) **EP 4 431 209 B1**
(45) Veröffentlichungstag und Bekanntmachung des Hinweises auf die Patenterteilung: **16.09.2026**
(21) Anmeldenummer: 23161971.9
(22) Anmeldetag: 15.03.2023
(51) Int. Cl.: B23B 3/06, B23G 1/34, B23B 9/08

(54) **VORRICHTUNG UND VERFAHREN ZUM BEARBEITEN VON WERKSTÜCKEN AUF EINER MEHRSPINDELDREHMASCHINE**
DEVICE AND METHOD FOR MACHINING WORKPIECES ON A MULTISPINDLE LATHE
DISPOSITIF ET PROCÉDÉ D'USINAGE DE PIÈCES SUR UN TOUR MULTIBROCHES

(43) Veröffentlichungstag der Anmeldung: 18.09.2024
(60) Teilanmeldung: 24159439.9 / 4 434 655
(73) Patentinhaber: HG Medical GmbH, 82399 Raisting (DE)
(72) Erfinder: SCHMIDT, Sebastian, 86911 Dießen/Dettenschwang (DE)
(74) Vertreter: Riebling, Peter

(56) Entgegenhaltungen:
- DE-A1- 102017 121 295
- DE-A1- 3 721 732

## Beschreibung

Die Erfindung betrifft eine Vorrichtung und ein Verfahren zum Bearbeiten von Werkstücken auf einer Mehrspindeldrehmaschine nach den Oberbegriffen der Ansprüche 1 und 11.

Unter einer Drehmaschine wird eine Werkzeugmaschine verstanden, mit welcher eine spanende Bearbeitung eines Werkstücks erfolgt. Die Drehmaschinen werden nach der Art des Maschinenbetts, der Lage der Spindel, oder der Anzahl der Spindeln eingeteilt. In der Regel führt das Werkstück eine Drehbewegung aus, wobei sich die Drehverfahren nach Art der zu erzeugenden Fläche (Runddrehen, Plandrehen, Gewindedrehen, Stechdrehen, Profildrehen, Formdrehen) unterscheiden.

Für die Fertigung von einfachen Teilen mit großen Stückzahlen, wie z.B. Muttern oder Schrauben werden Drehautomaten (Ein- oder Mehrspindel-Drehautomat) eingesetzt, welche einen oder mehrere gesteuerte Schlitten und/oder Revolver aufweisen, die mit Werkzeugen bestückt sind. Bei einem Mehrspindel-Drehautomat werden die Werkstückspindeln taktend zu einzelnen Bearbeitungsstationen gedreht, wo das Werkstück schrittweise bearbeitet wird. Wesentlicher Vorteil eines Mehrspindel- Drehautomaten ist, dass mit diesem mehrere Fertigungsschritte parallel durchgeführt werden können.

Die Firma INDEX-Werke GmbH & Co. KG Hahn & Tessky bietet beispielsweise mit der Bezeichnung MS22-8 einen CNC-Mehrspindeldrehautomat mit acht drehend angetriebenen Werkstückspindeln, zwei Schwenk-Synchronspindeln und bis zu maximal 16 Werkzeugträger an, welche in X-Y- und Z- Richtung konfigurierbar sind. Die Werkstückspindeln können Werkstücke mit einem maximalen Stangendurchmesser von 22 mm aufnehmen. Auf den Werkzeugträger können stehende und drehend angetriebene Werkzeug angeordnet werden, mit welchen beispielsweise ein außermittiges Bohren und Gewindeschneiden, Bohren (Schräg- und Querbohren), Konturfräsen oder Mehrkantdrehen möglich ist.

Bei den Drehautomaten unterscheidet man zwischen einem Kurzdrehautomaten (Kurzdreher) und einem Langdrehautomaten (Langdreher). Bei einem Kurzdreher kann das Werkstück in axialer Richtung bezüglich der Werkzeuge nicht verschoben werden. Hier führt das Werkzeug die axiale Bewegung aus im Gegensatz hierzu findet bei einem Langdreher eine Relativbewegung zwischen Werkstück und Werkzeug statt, wobei das Werkstück mit einem Beladesystem in die jeweilige Spindel geschoben wird und mit Hilfe einer Spannzange gespannt und in einer Führungsbüchse (Lünette) geführt ist.

Mit den Kurzdrehautomaten waren bisher nur eine Bearbeitung von Werkstücken mit einer eher geringeren Länge im Verhältnis zum Durchmesser möglich. Die Kurzdrehautomaten und Mehrspindelautomaten waren bisher nicht für lange und schmale Drehteile geeignet, da aufgrund des ungünstigen Verhältnisses von Länge zu Durchmesser keine stabile oder präzise Bearbeitung, insbesondere im Bereich der Werkstückspitze möglich gewesen ist.

Aus dem Stand der Technik sind bereits verschiedene Kurzdreher, Langdreher, sowie Mehrspindeldrehmaschinen bekannt.

Die DE 10 2017 121 295 A1 offenbart eine Mehrspindeldrehmaschine mit einer drehbar gelagerte Spindeltrommel mit Werkstückspindeln, wobei die Werkstücke durch Drehen der Spindeltrommel gegenüber stationär angeordneten Spindelstationen positionierbar sind. Zur Bearbeitung von längeren Werkstücken ist bei der vorliegenden Ausführungsform jeder Werkstückspindel eine Werkstückführungsbuchse zur Führung einer in der Werkstückspindel gehaltenen Werkstoffstange zugeordnet, welche relativ zu der jeweiligen Werkstückspindel in Richtung parallel zur Werkstückspindelachse bewegbar angeordnet ist.

Mit der EP 3 208 016 A2 wird ein Werkzeughalter für eine Langdrehmaschine offenbart, wobei auf einem Werkzeugschlitten ein Gehäuse mit einer drehend angetriebenen Welle angeordnet ist, welche über Mitnehmerelemente unterschiedliche Werkzeuge, wie beispielsweise eine Vorrichtung zum Gewindewirbein oder eine Fräsvorrichtung antreibt. Die vorliegende Ausführungsform ist jedoch nur für eine Langdrehmaschine und nicht für einen Mehrspindeldrehautomaten geeignet.

Mit der DE 37 21 732 A1 wird eine Vorrichtung zum Gewinde-Wirbelschneiden mit Schneidwerkzeugen, sowie einem Fräsaggregat offenbart, welche insbesondere zum Herstellen von Extruder- oder Förderschnecken eingesetzt wird.

Bei den bekannten Mehrspindel-Drehmaschinen besteht der Nachteil, dass keine langen Werkstücke mit einer Länge von dreimal den Durchmesser bearbeitet werden können, ohne dass das Werkstück während der Bearbeitung schwingt oder vibriert.

Ein weiterer Nachteil bei den bekannten Mehrspindel-Drehmaschinen ergibt sich bei der Bearbeitung eines langes Werkstück, beispielsweise bei der Herstellung einer Schraube, bei welcher mindestens drei Bearbeitungsschritte. (Drehen, Fräsen, Wirbeln) durchgeführt werden müssen. Da nicht jeder Schlitten der Mehrspindel-Drehmaschine eine Y-Achse aufweist, ist es nicht möglich an der gleichen Spindelstation eine Entgratung und ein Abdrehen durchzuführen. Die Bearbeitung mit einem Drehmeißel muss somit an einem weiteren Schlitten erfolgen, wodurch die Mehrspindel-Drehmaschine nicht optimal ausgenutzt wird. Es besteht daher die Aufgabe der vorliegenden Erfindung einen Werkzeugträger bzw. ein Werkzeug für einen Werkzeugschlitten bei einer Mehrspindel-Drehmaschine dergestalt weiterzubilden, um lange Werkstücke bearbeiten zu können und gleichzeitig die Mehrspindel-Drehmaschine optimal auszunutzen.

Zur Lösung der gestellten Aufgabe ist die Erfindung durch die technische Lehre der Ansprüche 1 und 11 gekennzeichnet.

Wesentliches Merkmal der Erfindung ist, dass auf einem ersten Werkzeugschlitten mindestens eine Wirbel-Dreh-Fräseinheit und auf dem zweiten Werkzeugschlitten mindestens ein Führungsbuchsenträger mit mindestens einer Führungsbuchse angeordnet ist und dass der Führungsbuchsenträger das Werkstück während der Bearbeitung mit der Wirbel-Dreh-Fräseinheit führt.

Mit der erfindungsgemäßen Ausführungsform ergibt sich der Vorteil, dass nun auch lange Werkstücke mit einer Mehrspindeldrehmaschine bearbeitet werden können, da während des Bearbeitungsvorganges das Werkstück von dem Führungsbuchsenträger und der dazugehörigen Führungsbuchse geführt und stabilisiert wird.

Der Führungsbuchsenträger ist vorzugsweise auf dem benachbarten Schlitten der Wirbel-Dreh-Fräseinheit angeordnet und hält bzw. führt das zu bearbeitende Werkstück zwischen der Werkstückspindel und dem Werkzeug. Dadurch wird eine Führung bzw. ein Halten des Werkstücks im Zwischenraum, d.h. zwischen der Werkstückspindel und dem Werkzeug erreicht. Der Führungsbuchsenträger ist somit ein zusätzliches Bauteil, welcher von einem benachbarten Werkzeugschlitten das Werkstück während der Bearbeitung führt und stabilisiert.

Bei einer ersten bevorzugten Ausführungsform weist die Mehrspindeldrehmaschine mehrere Werkzeugträger mit beweglichen Werkzeugschlitten auf. Jeweils zwei Werkzeugträger sind einer Werkstückspindel zugeordnet und bilden eine Spindellage. Dies bedeutet, dass jeder Spindelstation zwei Werkzeugschlitten zugeordnet sind. Vorzugsweise ist der erste Werkzeugschlitten und der zweite Werkzeugschlitten V-förmig angeordnet, wobei der Schnittpunkt in Richtung des Zentrums der Werkstückspindel ausgerichtet ist. Auf dem ersten Schlitten ist die Wirbel-Dreh-Fräseinheit angeordnet und auf dem zweiten Schlitten der Führungsbüchsenträger mit der Führungsbüchse.

Der Begriff erster und zweiter Werkzeugschlitten wird nur beispielhaft genannt. Es handelt sich hierbei um zwei benachbarte Werkzeugschlitten. Diese Werkzeugschlitten können in jeder Spindellage sein. Bei der erfindungsgemäßen Ausführungsform können jegliche Werkzeugschlitten eingesetzt werden. Teilweise benötigen einige Werkzeuge keine Bewegung in Y-Achse, so dass auch standardisierte Werkzeugschlitten eingesetzt werden können.

Die erfindungsgemäße Wirbel-Dreh-Fräseinheit umfasst vorzugsweise ein Gehäuse, welches auf einem Werkzeugschlitten angeordnet ist. Das Gehäuse ist U-Förmig ausgebildet und weist zwei hervorstehende Schenkel auf. An dem ersten Schenkel ist ein erstes Werkzeug angeordnet, welches als Wirbeleinheit ausgebildet ist. An dem zweiten Schenkel ist ein zweites Werkzeug angeordnet, welches als Fräseinheit ausgebildet ist. Zusätzlich ist an dem zweiten Schenkel eine Dreheinheit angeordnet.

Die Wirbel-Dreh-Fräseinheit vereint somit drei unterschiedliche Werkzeuge in einem Gehäuse und auf einem Werkzeugschlitten. Die Form der Wirbel-Dreh-Fräseinheit ist hierbei so ausgebildet, dass keine Kollisionen zwischen den einzelnen Werkzeugen entstehen. Das Werkzeug kann als ein drehend angetriebenes oder ein nicht drehend angetriebenes Werkzeug ausgebildet sein, wie z.B. eine Wirbeleinheit, eine Dreheinheit oder eine Fräseinheit

Vorzugsweise ist die Wirbel-Dreh-Fräseinheit auf einem Werkzeugschlitten der Mehrspindeldrehmaschine angeordnet, welcher eine Bewegung in X- Y- und Z-Achse ausführt. Durch die 3-Achs-Bewegung ist es möglich die einzelnen Werkzeuge der Wirbel-Dreh-Fräseinheit gezielt gegenüber dem Werkstück zu positionieren, welches während der Bearbeitung in einer der Werkstückspindel angeordnet ist.

Bei einer bevorzugten Ausführungsform befindet sich ein erstes angetriebenes Werkzeug am ersten Schenkel und ein zweites angetriebenes Werkzeug am zweiten Schenkel des Gehäuses der Wirbel-Dreh-Fräseinheit. Der Antrieb der Werkzeuge erfolgt über eine Getriebevorrichtung und einem Antriebsmotor, welcher beispielsweise in der Basis des Werkzeugschlittens angeordnet ist.

Bei einer weiteren bevorzugten Ausführungsform ist der Antriebsmotor direkt an die Wirbel-Dreh-Fräseinheit angeflanscht und wird von der Mehrspindeldrehmaschine angesteuert.

Mit der Getriebevorrichtung findet eine Übertragung von Kräften jeglicher Art statt. Die Getriebevorrichtung ist beispielsweise als Zahnradgetriebe, Zahnriemengetriebe, Kettengetriebe und/oder Riemengetriebe ausgebildet.

Das Gehäuse der Wirbel-Dreh-Fräseinheit weist einen ersten Schenkel, einen dazwischenliegenden, stegartigen Verbindungskörper und einen zweiten Schenkel auf, wobei alle Bauteile Ausnehmungen und Bohrungen aufweisen, um die Getriebevorrichtungen aufzunehmen. Die einzelnen Werkzeuge sind mit der Getriebevorrichtung gekoppelt, wobei eine Kraftübertragung zwischen dem ersten und dem zweiten Schenkel vorzugsweise über eine drehbare Welle erfolgt, welche im Verbindungskörper angeordnet ist.

Der Führungsbuchsenträger umfasst einen Trägerkörper mit einer Ausnehmung zur Aufnahme einer Führungsbuchse. Unter einer Führungsbuchse wird ein Art Lager verstanden, welches das Werkstück führt. Vorzugsweise ist die Führungsbüchse als hohler Zylinder aus einem speziellen Werkstoff ausgebildet, mit einem definierten Innen- und Außendurchmesser. Die Führungsbuchse ist beispielsweise ein Lineargleitlager, welches dem Werkstück eine Art der Gleitführung bietet.

Bei einer weiteren bevorzugten Ausführungsform ist die Führungsbuchse stehend, angetrieben von der Werkstückspindel oder weist einen eigenen Motor auf, welche die Buchse während der Bearbeitung aktiv antreibt. Vorzugsweise ist die Führungsbuchse austauschbar, wobei der Durchmesser der Buchse in etwa dem Durchmesser des zu bearbeitenden Werkstücks entspricht. Bei einer bevorzugten Ausführungsform weist der Führungsbüchsenträger eine einer externe Druckversorgung, (Pumpe oder Gasdruckbehälter) auf, welche fortwährend einen flüssigen Schmierstoff mit konstantem Druck über Einlasskanäle in die Führungsbuchse presst, wodurch ein dünner Schmierfilm zwischen der Führungsbuchse und dem Werkstück entsteht. Die Mehrspindeldrehmaschine umfasst ein Maschinengestell, an welchem drehbar angetrieben eine Spindeltrommel um eine Spindeltrommelachse angeordnet ist. Vorzugsweise weist die Spindeltrommel acht drehbar angetriebene Werkstückspindeln auf, welche gleichmäßig über den Umfang an der Spindeltrommel verteilt angeordnet sind. Das zu bearbeitende Werkstück wird in der Werkstückspindel von einer Spannzange gehalten. Durch Drehen der Spindeltrommel werden die Werkstückspindel gegenüber zugeordneten Werkzeugträgern gedreht. Die Werkzeugträger sind stationär auf dem Maschinengestell angeordnet. Auf den Werkzeugträgern befinden sich Werkzeugschlitten mit Werkzeugen, welche gegenüber den Werkstücken bewegbar sind. Die Werkzeugträger mit den Werkzeugschlitten sind vorzugsweise paarweise angeordnet, wobei einer Werkzeugspindel jeweils zwei Werkzeugträger, d.h. ein Schlittenpaar zugeordnet ist. Eine Spindellage umfasst somit eine Werkzeugspindel, sowie ein Schlittenpaar, welches V-förmig angeordnet ist. Bei acht Werkzeugspindel gibt es somit acht Spindellagen mit 16 Schlitten.

Der Werkzeugschlitten wird mittels einem Schlittenantrieb bewegt. Der Antriebsmotor befindet sich vorzugsweise in der Werkzeugträgerbasis und treibt beispielsweise einen Spindelantrieb an. Mit dem Werkzeugschlitten ist das gehaltene Werkzeug sowohl in X-Richtung quer zur jeweiligen Achse der Werkstückspindel als auch in Z-Richtung parallel zur jeweiligen Achse der Werkstückspindel bewegbar. Optional sind einige Schlitten in Y-Achse bewegbar.

Bei einer bevorzugten Ausführungsform weist die Mehrspindeldrehmaschine mindestens eine Schwenk-Synchronspindel auf, mit welcher eine rückseitige Bearbeitung des Werkstücks erfolgt.

Bei einer weiteren bevorzugten Ausführungsform weist die Mehrspindeldrehmaschine mindestens zwei Wirbel-Dreh-Fräseinheiten auf, welche in zwei Spindellagen angeordnet sind. Die beiden Spindellagen sind dergestalt synchronisiert, dass keine Kollision zwischen den beiden benachbarten Wirbel-Dreh-Fräseinheiten entsteht.

Mit der vorliegenden Patentanmeldung wird ferner ein Verfahren zur Bearbeitung eines Werkstücks beansprucht. Bei dem Verfahren wird eine Mehrspindeldrehmaschine eingesetzt, welche mindestens eine Werkzeugspindel und mindestens zwei Schlitten aufweist, die V-förmig gegenüber der Werkzeugspindel angeordnet sind, wobei an dem mindestens einen Schlitten eine Wirbel-Dreh-Fräseinheit und an dem anderen Schlitten ein Führungsbüchsenträger angeordnet ist, wobei die folgenden Verfahrensschritte durchgeführt werden:
1. Anordnen mindestens eines Werkstücks in der Werkstückspindel der Mehrspindeldrehmaschine;
2. Positionieren des Führungsbuchsenträgers gegenüber dem Werkstück, wobei eine Führungsbuchse des Führungsbuchsenträgers auf das zu bearbeitende Werkstück aufgesetzt wird, so dass das Werkstück im Zwischenbereich zwischen der Werkzeugspindel und dem Werkzeug von der Führungsbuchse geführt ist;
3. Ausrichtung der Wirbel-Dreh-Fräseinheit, welche eine Wirbeleinheit, eine Fräseinheit und eine Dreheinheit umfasst und an-schließendes Bearbeiten des Werkstücks mit der Wirbeleinheit und/oder Fräseinheit und/oder Dreheinheit.

Bei einer bevorzugten Ausführungsform wird mit dem erfindungsgemäßen Verfahren eine Schraube mit einer Mehrspindeldrehmaschine hergestellt. Die Mehrspindeldrehmaschine weist mindestens eine Werkzeugspindel und mindestens zwei Werkzeugträger mit Werkzeugschlitten auf, welche V-förmig gegenüber der Werkzeugspindel angeordnet sind, wobei an dem mindestens einen Werkzeugschlitten eine Wirbel-Dreh-Fräseinheit und an dem anderen Werkzeugschlitten ein Führungsbuchsenträger angeordnet ist, wobei die folgenden Verfahrensschritte durchgeführt werden:

### 3 Spitze drehen

Ausrichtung der Wirbel-Dreh-Fräseinheit, wobei eine Dreheinheit gegenüber dem Werkstück in X-, Y- und Z- Achse ausgerichtet wird und an-schließendes Bearbeiten des Werkstücks mit der Dreheinheit;

### 4. Schneide fräsen

Ausrichtung der Wirbel-Dreh-Fräseinheit, wobei eine Fräseinheit gegenüber dem Werkstück in X-, Y- und Z- Achse ausgerichtet wird und an-schließendes Bearbeiten des Werkstücks mit der Fräseinheit:

### 5. Gewinde wirbeln

Ausrichtung der Wirbel-Dreh-Fräseinheit, wobei eine Wirbeleinheit gegenüber dem Werkstück in X-, Y- und Z- Achse ausgerichtet wird und an-schließendes Bearbeiten des Werkstücks mit der Wirbeleinheit;

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht.

Im Folgenden wird die Erfindung anhand von mehreren Ausführungswegen darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematische Darstellung einer Mehrspindeldrehmaschine mit den acht Spindelstationen
- Figur 2:: schematische Darstellung der Wirbel-Dreh-Fräseinheit und des Führungsbuchsenträger
- Figur 3:: schematische Darstellung zweier Wirbel-Dreh-Fräseinheiten und zweier Führungsbuchsenträger

- Figur 4:: schematische Seitenansicht der Wirbel-Dreh-Fräseinheit und des Führungsbuchsenträgers
- Figur 5:: Seitenansicht der Wirbel-Dreh-Fräseinheit
- Figur 6:: Unteransicht der Wirbel-Dreh-Fräseinheit
- Figur 7:: Draufsicht auf die Wirbel-Dreh-Fräseinheit
- Figur 8.: perspektivische Ansicht der Wirbel-Dreh-Fräseinheit
- Figur 9:: Schnittdarstellung der Wirbel-Dreh-Fräseinheit

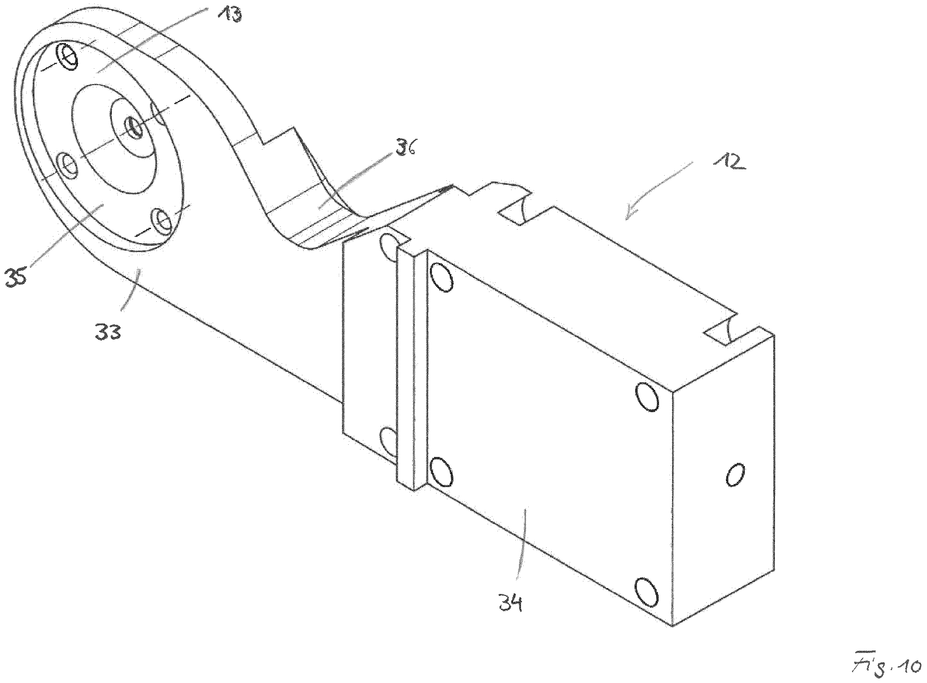

- Figur 10:: perspektivische Darstellung des Führungsbuchsenträgers

- Figur 11:: Draufsicht des Führungsbuchsenträgers

- Figur 12:: Unteransicht auf den Führungsbuchsenträger

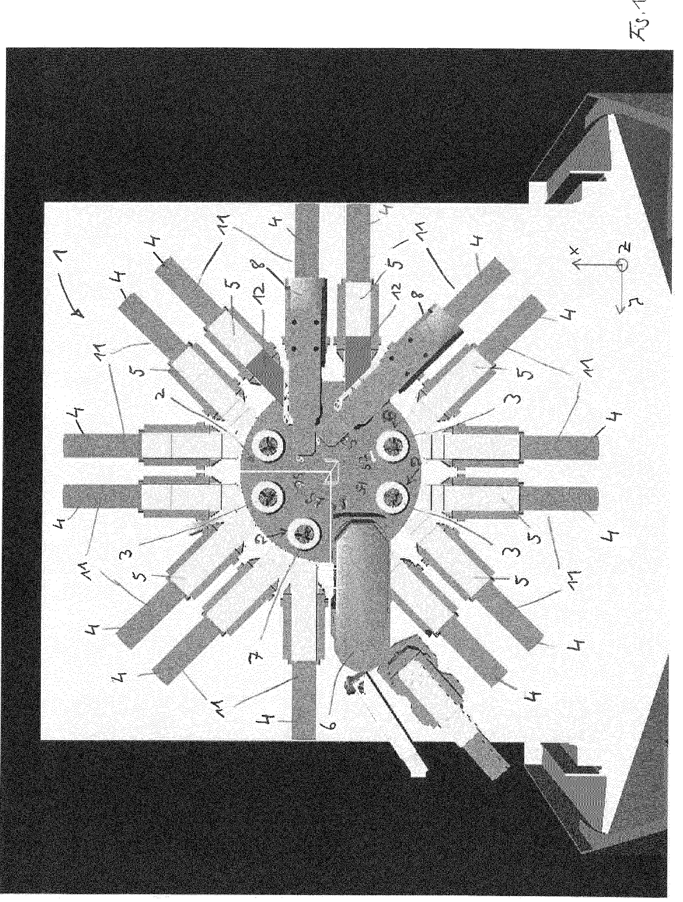

Mit der Figur 1 wird eine Werkzeugmaschine gezeigt, welche als Mehrspindel-drehmaschine 1 ausgebildet ist. Die Mehrspindeldrehmaschine 1 weist ein Maschinenbett mit einer drehbar gelagerten Spindeltrommel 2 und relativ zur Spindeltrommel 2 drehbar angetriebene Werkstückspindeln 3 auf. Die zu bearbeitenden Werkstücke 3 sind in den Werkstückspindeln 3 angeordnet. Zur Bearbeitung der Werkstücke 7 wird die Spindeltrommel 2 zu den einzelnen Spindellagen gedreht und dort mit verschiedenen Werkzeugen 9 bearbeitet, welche auf Werkzeugschlitten 5 angeordnet sind.

Die Mehrspindeldrehmaschine 1 hat acht drehend angetriebene Werkstückspindeln 3, wobei jeder Werkstückspindel 3 jeweils zwei Werkzeugschlitten 5 zugeordnet sind. Die Schlittenpaare 11 (Schlitten-Units) sind jeweils V-förmig zum Zentrum der jeweiligen Werkzeugspindel 3 angeordnet und ergeben eine sogenannte Spindelstation 19. Bei der vorliegenden Ausführungsform gibt es somit insgesamt acht Spindelstationen 19, welche jeweils mit einer Nummerierung gekennzeichnet sind.

Gemäß der Figur 1 ist auf der achten Spindelstation (Nr. 8) eine Synchronspindel 6 (=Abgreifspindel) angeordnet, welche als Schwenk-Synchronspindel ausgebildet ist. Die Synchronspindel 6 übernimmt nach der erfolgten Bearbeitung das Werkstück 7 von der Werkstückspindel 3. Durch die Anordnung einer Synchronspindel 6 entfällt bei der Spindelstation 19 ein Werkzeugschlitten 5. Der weitere Werkzeugschlitten 5 der achten Spindelstation 19 wird für das Aufbauen der Synchronspindel 6 genutzt.

Jeder Werkzeugschlitten 5 kann in Z-Achse bewegt werden, wodurch der Schlitten 5 mit einem Hub von beispielsweise 100mm von der Spindeltrommel 2 beabstandet wird. Des Weiteren kann jeder Werkzeugschlitten 5 in X-Achse bewegt werden, wodurch der Werkzeugschlitten 5 gegenüber der Werkstückspindel 3 bewegbar ist. Eine Bewegung in X-Achse ist notwendig um die neuartige Wirbel-Dreh-Fräseinheit 8, welche auf dem Werkzeugschlitten 5 angeordnet ist, zu bewegen. Durch die Bewegung in X-Achse werden die unterschiedlichen Werkzeuge 9 der Wirbel-Dreh-Fräseinheit 8 in Eingriff mit dem eingespannten Werkstück 7 in der Werkstückspindel 3 gebracht.

Die Werkzeugschlitten 5 auf der Spindelstationen 3.1, 4.1, 5.1 und 6.1 weisen bevorzugten einen Antrieb in Y-Achse auf, wodurch die Wirbel-Dreh-Fräseinheit 8 in der Höhe schwenkbar ist. Dies ist immer dann nützlich, wenn mehrere Werkzeuge 9 in Y-Richtung korrigiert werden müssen oder die Bearbeitung eine Y Achse fordert.

Vorzugsweise werden beide Werkzeugschlitten 5 eines Schlittenpaares 11 für die Bearbeitung an einer Werkstückspindel 3 eingesetzt. Gemäß der Figur 1 sind in den Lagen 3.2 und 4.2 jeweils ein Führungsbuchsenträger 12 auf einem Werkzeugschlitten 5 angeordnet. Der Führungsbuchsenträger 12 nimmt eine separate Führungsbuchse 13 auf, wobei die Führungsbuchse 13 an den Durchmesser des zu bearbeitenden Werkstücks 7 angepasst ist. Beispielsweise ist die Führungsbuchse 13 zur Halterung eines 5 mm Werkstücks geeignet.

Die Führungsbuchse 13 wird mit einem Kühlmittel beaufschlagt, wodurch eine hydrostatische Führung des Werkstücks 7 innerhalb der Führungsbuchse 13 erreicht wird.

Jeder Schlitten 5 kann unabhängig angesteuert werden. Dies hat den Vorteil, dass die Führungsbuchse 13 das Werkstück 7 an unterschiedlichen Stellen halten bzw. führen kann. Beispielsweise fährt bei einer Bewegung der Wirbel-Dreh-Fräseinheit 8 in Z-Richtung gleichzeitig bzw. parallel und mit einem vorab definierten Abstand der Führungsbuchsenträger 12 ebenfalls in Z-Richtung. Dadurch wird erreicht, dass das Werkstück 7 jederzeit ausreichend mit der Führungsbuchse 13 geführt ist, wobei die Wirbel-Dreh-Fräseinheit 8 und der Führungsbuchsenträger 12 nicht miteinander kollidieren.

Des Weiteren ist die Form des Führungsbuchsenträgers 12 an die Form der Spannzange 13 der Werkstückspindel 3 angepasst. Vorzugsweise kann mit dem Führungsbuchsenträger 12 soweit in Z-Richtung nach unten gefahren werden, dass sich die Führungsbuchse 13 nahezu auf gleicher Höhe wie die Spannzange 14 befindet.

Gemäß der Figur 1 ist auf dem Schlitten 3.1 die Wirbel-Dreh-Fräseinheit 8 angeordnet und auf dem Schlitten 3.2 ist der Führungsbuchsenträger 12 angeordnet.

Vorzugsweise wird während der Bearbeitung des Werkstücks 7 der Führungsbuchsenträger 12 in der Z-Achse verfahren.

Der Wirbelplattensitz, d.h. der Plattensitz für die Wirbelmesser entspricht der Schwerkachse von der Wirbeleinheit 15. Dadurch ist es möglich die Wirbeleinheit 15 entsprechenden dem Winkel der Steigung des gewünschten Gewindes der Schraube einzustellen. Die Wirbel-Dreh-Fräseinheit 8 ist an einem Werkzeugschlitten 5 angeordnet, welcher in Y-Achse bewegbar ist. Dadurch kann ein Versatz der Wirbelmesser ausgeglichen werden, wenn nicht die Schwenkmitte gleich dem Mittelpunkt der Schneide entspricht.

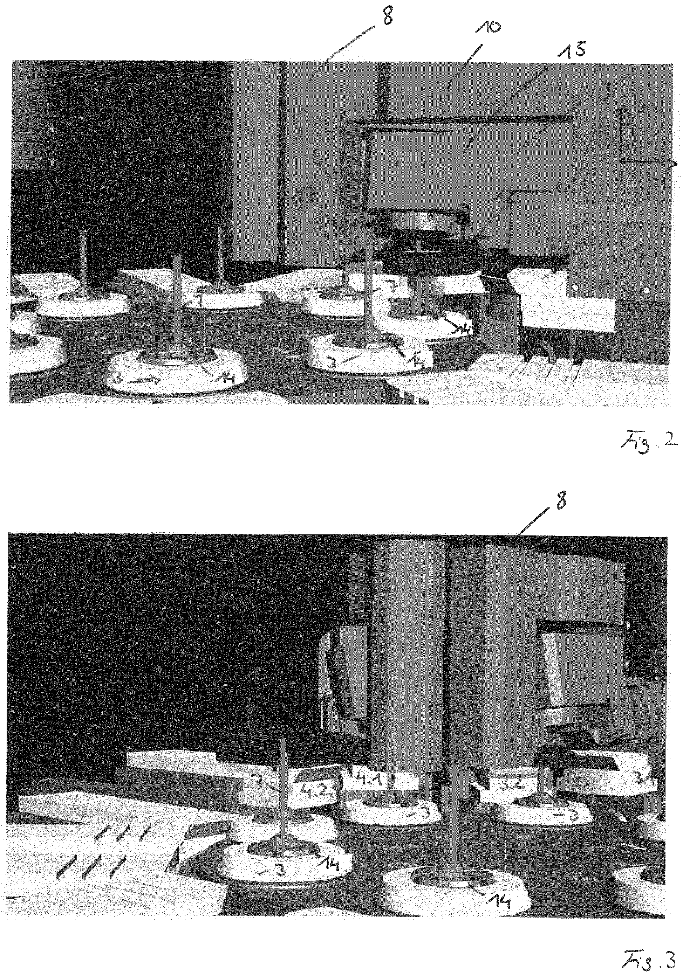

Figur 2 zeigt eine Bearbeitung eines Werkstücks 7 mit der Wirbel-Dreh-Fräseinheit 8 und dem Führungsbuchsenträger 12. Die Wirbel-Dreh-Fräseinheit 8 umfasst ein Gehäuse 9, an welchem verschiedene Werkzeuge 9 angeordnet sind. Bei den Werkzeugen 9 handelt es sich um eine Wirbeleinheit 15, eine Fräseinheit 16 und eine Dreheinheit 17.

Das eine Ende des Werkstücks 7 ist in der Spannzange 14 der Werkstückspindel 3 eingespannt. Das andere Ende des Werkstücks 7 wird mit der Wirbeleinheit 15 bearbeitet, wobei die Wirbeleinheit 15 in Z-Achse bewegt wird. Gleichzeitig bzw. parallel findet eine gesteuerte Bewegung des Führungsbuchsenträgers 12 statt, so dass stets eine ausreichende Führung des Werkstücks 7 erreicht wird. Die Führungsbuchse 13 befindet sich somit stets mit einem Abstand (z.B. 1-2 mm) unterhalb der Wirbeleinheit 15 und wird bei der Bearbeitung mit dem Werkzeug 9 in Z-Achse mitgefahren, so dass das Werkstück 7 relativ nahe im Bearbeitungsbereich ausreichend geführt ist. Es findet somit ein paralleles Bewegen des Führungsbuchsenträgers 12 während der Bearbeitung des Werkstücks 7 mit dem Werkzeug 9 der Wirbel-Dreh-Fräseinheit 8 statt.

Durch die gesteuerte Führung des Führungsbuchsenträgers 12 wird das Werkstück 7 während der Bearbeitung stabilisiert. Es können somit relativ lange Werkstücke 7 bearbeitet werden, da der Führungsbuchsenträger 12 das Werkstück 7 zwischen der Spannzange 14 der Werkstückspindel 3 und dem jeweilige Werkzeug 9 in der Art eines Gleitlagers führt.

Figur 3 zeigt eine weitere Ansicht der Wirbel-Dreh-Fräseinheit 8 und dem Führungsbuchsenträger 12. Am Schlitten 5 (Lage 3.1) ist eine erste Wirbel-Dreh-Fräseinheit 8 und am Schlitten 5 (Lage 3.2) ist der dazugehörige, erste Führungsbuchsenträger 12 angeordnet. Am Schlitten 5 (Lage 4.1) ist eine zweite Wirbel-Dreh-Fräseinheit 8 und am Schlitten 5 (Lage 4.2) ist der dazugehörige, zweite Führungsbuchsenträger 12 angeordnet.

In jeder Spannzange 14 der Werkstückspindel 3 ist ein Werkstück 7 eingespannt. Bei der Bearbeitung in den Lage Nr.3 und Lage Nr.4 werden die Werkstücke 7 zusätzlich von dem Führungsbuchsenträger 12 gehalten.

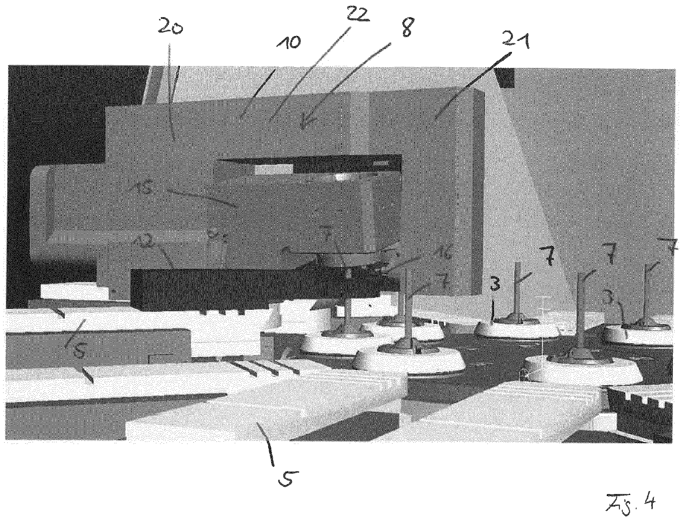

Figur 4 zeigt die Wirbel-Dreh-Fräseinheit 8 und den Führungsbuchsenträger 12 während der Bearbeitung eines Werkstücks 7. Die Wirbel-Dreh-Fräseinheit 8 weist ein U-förmiges Gehäuse 10 bei auf, wobei an einem ersten Schenkel 20 eine Wirbeleinheit 15 und an dem gegenüberliegenden zweiten Schenkel 21 eine Dreheinheit 17 und eine Fräseinheit 16 angeordnet sind. Die beiden Schenkel 20, 21 sind durch einen stegartigen Verbindungskörper 22 miteinander verbunden und bilden zusammen die U-Form aus.

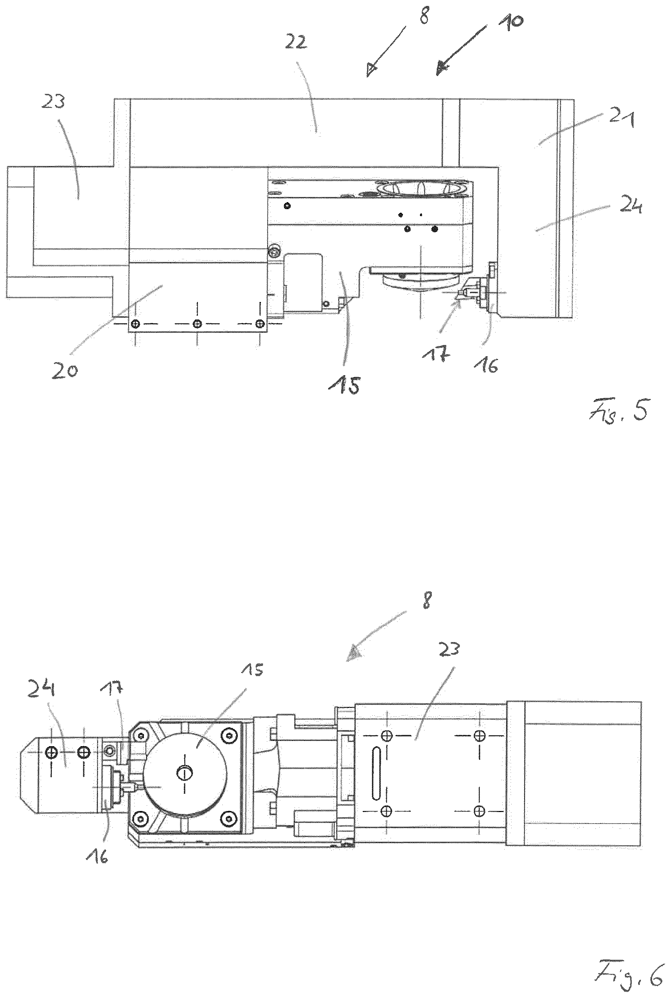

Figur 5 zeigt die Wirbel-Dreh-Fräseinheit 8, welche ein Gehäuse 10 aufweist, dass einen ersten Schenkel 20, einen Verbindungkörper 22 und einen zweiten Schenkel 21 umfasst. Der erste Schenkel 20 befindet sich auf der Motarseite 23. Dies bedeutet, dass sich auf der Motorseite 23 ein Antrieb für die drehend angetriebenen Werkzeuge, wie z.B. für die Wirbeleinheit 15 und für die Fräseinheit 16 befindet. Die Antriebskraft wird über eine Getriebevorrichtung durch den Verbindungskörper 22 geführt und im zweiten Schenkel 21, d.h. auf der Getriebeseite 24, an das drehende angetriebene Werkzeug 9 (Fräseinheit 16) abgegeben. Das Gehäuse 10 der Wirbel-Dreh-Fräseinheit 8 dient somit nicht nur als Halterung für die einzelnen Werkzeuge 9, sondern auch als Gehäuse für eine Getriebevorrichtung für das drehend angetriebene Werkzeug 9 am zweiten Schenkel 21.

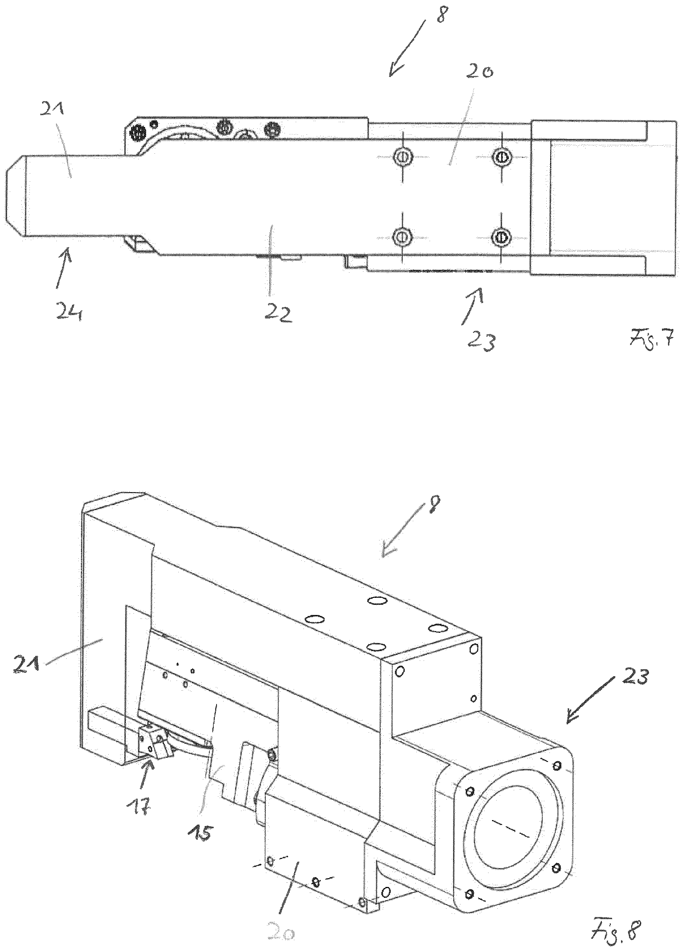

Figur 6 zeigt die Wirbel-Dreh-Fräseinheit 8 in der Unteransicht. Die einzelnen Werkzeuge 9 sind an den beiden beabstandeten Schenkeln 20, 21 angeordnet ohne eine Kollision zu verursachen. Die Wirbel-Dreh-Fräseinheit 8 weist an der Unterseite Befestigungsvorrichtungen auf, um auf einem Werkzeugträger bzw. einem Werkzeugschlitten 5 befestigt zu werden Mit der Figur 7 wird die Wirbel-Dreh-Fräseinheit 8 in einer Draufsicht gezeigt. Das Gehäuse 10 der Wirbel-Dreh-Fräseinheit 8 umfasst den ersten Schenkel 20, den Verbindungskörper 22, sowie den zweiten Schenkel 21. Der erste Schenkel 20 bildet bei der vorliegenden Ausführungsform das erste Bauteil aus, während der zweite Schenkel 21, sowie der Verbindungskörper 22 ein weiteres Bauteil ausbilden. Hierauf ist die Erfindung jedoch nicht beschränkt. Das Gehäuse 10 kann beispielsweise aus einteilig ausgebildet sein oder aus mehreren Teilen bestehen.

Figur 8 zeigt eine perspektivische Darstellung der Wirbel-Dreh-Fräseinheit 8. Die Wirbeleinheit 8 ist leicht gegenüber dem Gehäuse 10 gedreht. Dies ist notwendig, wenn ein Gewinde mit einer bestimmten Steigung in das Werkstück 7 gewirbelt werden soll. Auf der Motorseite 23 befindet sich ein Flansch, mit welchem eine Verbindung mit einem Antrieb für die drehende angetriebenen Werkzeuge 9 hergestellt wird.

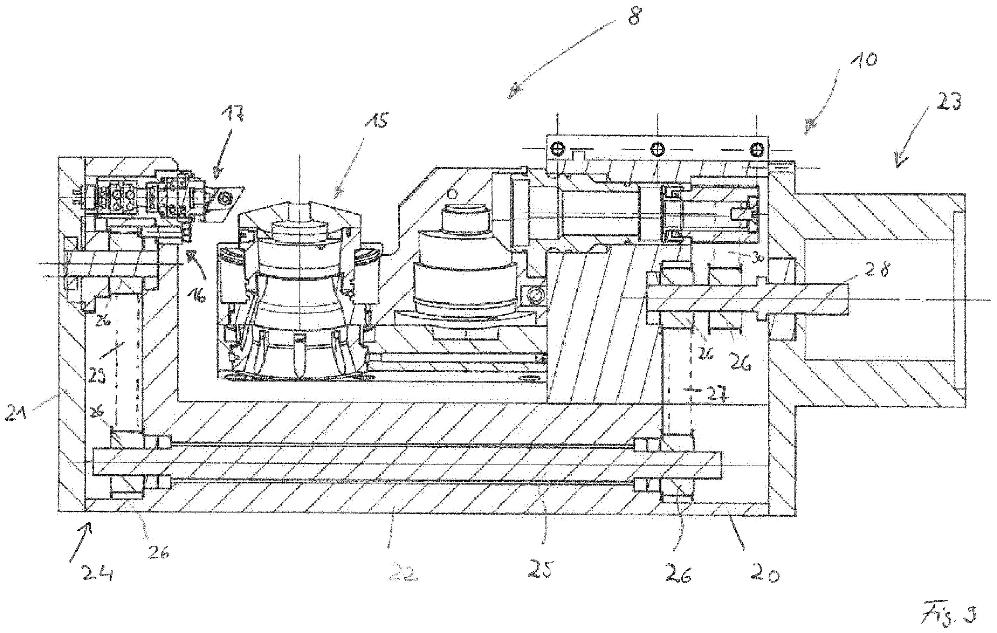

Mit der Figur 9 wird die Wirbel-Dreh-Fräseinheit 8 in einer Schnittdarstellung gezeigt, wobei die Getriebevorrichtung nun sichtbar ist.

Auf der Motorseite 23 befindet sich eine Eingangswelle 28, welche die Kraft von einem Antriebsmotor erhält. Auf der Eingangswelle 28 sind zwei Zahnritzel 26 angeordnet, wobei über einen ersten Zahnriemen 30 die Kraft an die Wirbeleinheit 15 und über einen zweiten Zahnriemen 27 die Kraft an eine Welle 25 abgeben wird. Die drehbar Welle 25 ist im Verbindungskörper 22 angeordnet und stellt eine drehende Verbindung zwischen der Motorseite 23 und der Getriebeseite 24 her. Auf der Getriebeseite 24 befindet sich auf der Welle 25 ein weiteres Zahnritzel 26, welcher über einen Zahnriemen 29 die Fräseinheit 16 antreibt.

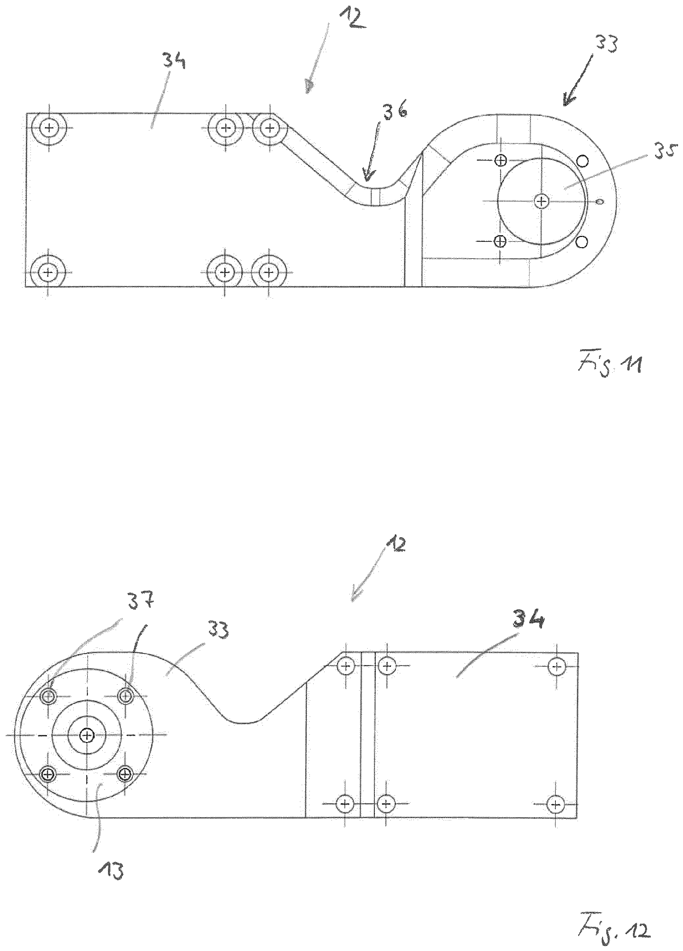

Figur 11 zeigt eine perspektivische Darstellung des Führungsbuchsenträgers 12.

Der Führungsbuchsenträger 12 weist einen Befestigungsteil 34 auf, mit welchem der Führungsbuchsenträger 12 auf einem Werkzeugschlitten 7 befestigt wird.

Des Weiteren weist der Führungsbuchsenträger 12 einen Führungskopf 33 auf, welche freitragend ist und eine Aufnahme für die Führungsbuchse 13 aufweist.

Durch den freitragenden Führungskopf 33 ist das Werkstück 7 während der Bearbeitung mit der Wirbel-Dreh-Fräseinheit 8 gehalten und/oder geführt, ohne dass der Führungsbuchsenträger 12 in Kollision mit der Wirbel-Dreh-Fräseinheit 8 ist.

Des Weiteren weist der Führungskopf 33 im Bereich der Aufnahme für die Führungsbuchse 13 auf der Unterseite eine schalenartige Ausnehmung 35 auf, welche in etwa der Form der Werkstückspindel 3 bzw. der Spannzange 14 der Werkstückspindel 3 entspricht. Durch die besondere Form der Ausnehmung 35 ist es somit möglich, die Führungsbuchse 13 während der Bearbeitung des Werksstücks ohne Kollision relativ nahe an die Werkstückspindel 3 heranzufahren.

Ferner weist der Führungsbuchsenträger 12 eine seitliche Ausnehmung 36 im Bereich des Führungskopfes 33 auf, mit welcher ebenfalls eine Kollision vermieden wird.

Figur 11 zeigt eine Draufsicht des Führungsbuchsenträgers 12. Im Bereich des Führungskopfes 33 weist der Führungsbuchsenträger 12 zahlreiche abgeschrägte bzw. gefaste Kanten auf, mit welchen mögliche Kollisionen mit anderen Bauteilen vermieden werden.

Mit der Figur 12 wird eine Unteransicht auf den Führungsbuchsenträger 12 gezeigt, wobei die Führungsbuchse 13 lösbar mit einer Schraubverbindung 37 am Führungskopf 33 das Führungsbuchsenträgers 12 angeordnet ist. Durch die lösbare Schraubverbindung 37 lassen sich zahlreiche unterschiedliche Führungsbuchsen 13 mit unterschiedlichen Durchmessem in den Führungsbuchsenträger 12 einsetzen.

Mit der erfindungsgemäßen Ausführungsform ist es nun möglich mit einer Mehrspindeldrehmaschine ein langes Werkstück zu bearbeiten ohne dass Schwingungen oder Vibrationen auftreten. Dies wird mit dem Einsatz der Wirbel-Dreh-Fräseinheit und dem Führungsbuchsenträger erreicht, welche auf zwei benachbarten Werkzeugschlitten angeordnet sind.

### Zeichnungslegende

- 1.: Mehrspindel-Drehautomat
- 2.: Spindeltrommel
- 3.: Werkstückspindel
- 4.: Werkzeugträger
- 5.: Werkzeugschlitten
- 6.: Synchronspindel
- 7.: Werkstück
- 8.: Dreh-Wirbel-Fräseinheit
- 9.: Werkzeug
- 10.: Gehäuse
- 11.: Schlittenpaar
- 12.: Führungsbuchsenträger
- 13.: Führungsbuchse
- 14.: Spannzange von 3
- 15.: Wirbeleinheit
- 16.: Fräseinheit
- 17.: Dreheinheit
- 18.: Spindellager
- 19.: Spindelstation
- 20.: 1.Schenkel
- 21,: 2.Schenkel
- 22.: Verbindungskörper
- 23.: Motorseite
- 24.: Getriebeseite
- 25.: Welle
- 26.: Ritzel
- 27.: Riemen
- 28.: Eingangswelle
- 29.: Riemen
- 30.: Riemen
- 31.: Kollisionspunkt
- 32.: Lagerung (hydrostatisch)
- 33.: Führungskopf
- 34.: Befestigungsteil
- 35.: Ausnehmung bei 13
- 36.: Ausnehmung (seitlich)
- 37.: Schraubverbindung

## Patentansprüche

1. Vorrichtung zum Bearbeiten von Werkstücken (7), die zum Zusammenwirken mit einer Mehrspindel-Drehmaschine (1) geeignet ist, wobei die Vorrichtung mindestens einen Werkzeugträger (4) mit mindestens zwei Werkzeugschlitten (5, 5', 5") umfasst, die dazu eingerichtet sind
einer drehbar gelagerten Werkstückspindel (3) der Mehrspindel-Drehmaschine (1) zugeordnet zu werden, wobei in den Werkstückspindeln (3) zu bearbeitende Werkstücke (7) angeordnet sind, **dadurch gekennzeichnet, dass** auf einem ersten Werkzeugschlitten (5, 5') mindestens eine Wirbel-Dreh-Fräseinheit (8) angeordnet ist, welche eine Wirbeleinheit (15), eine Fräseinheit (16) und eine Dreheinheit (17) umfasst und auf dem zweiten Werkzeugschlitten (5, 5") mindestens ein Führungsbuchsenträger (12) mit mindestens einer separaten Führungsbuchse (13) angeordnet ist und dass der Führungsbuchsenträger (12) dazu eingerichtet ist
das Werkstück (7) während der Bearbeitung mit der Wirbel-Dreh-Fräseinheit (8) zu führen.

2. Vorrichtung nach Anspruch 1, **dadurch gekennzeichnet, dass** die Wirbel-Dreh-Fräseinheit (8) ein Gehäuse (9) umfasst, an welchem die Wirbeleinheit (15), die Fräseinheit (16) und die Dreheinheit (17) angeordnet sind.

3. Vorrichtung nach Anspruch 1 oder 2, **dadurch gekennzeichnet, dass** am Führungsbuchsenträger (12) lösbar die separate Führungsbuchse (13) angeordnet ist, wobei die Führungsbuchse (13) wenn ein Werkstück (7) bearbeitet wird an den Durchmesser des zu bearbeitenden Werkstücks (7) angepasst ist.

4. Vorrichtung nach einem der Ansprüche 1 bis 3,
**dadurch gekennzeichnet,**
**dass** die Wirbel-Dreh-Fräseinheit (8) ein U-förmiges Gehäuse (10) mit zwei beabstandeten Schenkeln (20, 21) aufweist, wobei an dem ersten Schenkel (20) die Wirbeleinheit (15) und an dem zweiten Schenkel (21) die Fräseinheit (16) und die Dreheinheit (17) angeordnet sind.

5. Vorrichtung nach einem der Ansprüche 1 bis 4,
**dadurch gekennzeichnet,**
**dass** die Wirbel-Dreh-Fräseinheit (8) ein Gehäuse (10) mit einer Motorseite (23) und einer hiervon beabstandeten Getriebeseite (24) aufweist, wobei über eine Getriebevorrichtung ausgehend von der Motorseite (23) eine Kraftübertragung zur Getriebeseite hergestellt wird.

6. Vorrichtung nach einem der Ansprüche 1 bis 5,
**dadurch gekennzeichnet,**
**dass** die Führungsbuchse (13) mit einem Kühlmittel beaufschlagt wird, wodurch das Werkstück (7) hydrostatisch innerhalb der Führungsbuchse (13) geführt werden kann.

7. Vorrichtung nach einem der Ansprüche 1 bis 6,
**dadurch gekennzeichnet,**
**dass** der Führungsbüchsenträger (12) eine externe Druckversorgung aufweist, welche einen flüssigen Schmierstoff mit konstantem Druck über Einlasskanäle in die Führungsbuchse (13) presst, wodurch ein dünner Schmierfilm zwischen der Führungsbuchse (13) und dem Werkstück (7) entstehen kann.

8. Vorrichtung nach einem der Ansprüche 1 bis 7,
**dadurch gekennzeichnet,**
**dass** die Form des Führungsbuchsenträgers (12) wenn diese mit der Mehrspindel-Drehmaschine verwendet wird an die Form einer Spannzange (14) der Werkstückspindel (3) angepasst ist.

9. Vorrichtung nach einem der Ansprüche 1 bis 8,
**dadurch gekennzeichnet,**
**dass** der erste Werkzeugschlitten (5, 5') und der zweite Werkzeugschlitten (5, 5") V-förmig anordbar sind, wobei der Schnittpunkt in Richtung des Zentrums der Werkstückspindel (3) der Mehrspindel-Drehmaschine (1) ausgerichtet ist.

10. Vorrichtung nach einem der Ansprüche 1 bis 9,
**dadurch gekennzeichnet,**
**dass** die Werkzeugschlitten (5, 5', 5") mit der Wirbel-Dreh-Fräseinheit (8) und mit dem Führungsbuchsenträger (12) in der X- und Z-Achse bewegbar sind und bei einer Bewegung der Wirbel-Dreh-Fräseinheit (8) in Z-Richtung gleichzeitig bzw. parallel und mit einem vorab definierten Abstand der Führungsbuchsenträger (12) ebenfalls in Z-Richtung fährt.

11. Verfahren zum Bearbeiten mindestens eines Werkstücks (7) mit einer Mehrspindeldrehmaschine (1), welche mindestens eine Werkzeugspindel (3) und mindestens zwei Werkzeugschlitten (5, 5', 5") aufweist, die V-förmig gegenüber der Werkzeugspindel (5) angeordnet sind, wobei an dem einen Werkzeugschlitten (5, 5') eine Wirbel-Dreh-Fräseinheit (8) und an dem anderen Werkzeugschlitten (5, 5") ein Führungsbuchsenträger (12) angeordnet ist, wobei die folgenden Verfahrensschritte umgesetzt werden:
• Anordnen mindestens eines Werkstücks (7) in der Werkstückspindel (3) der Mehrspindeldrehmaschine (1);
• Positionieren des Führungsbuchsenträgers (12) gegenüber dem Werkstück (7), wobei eine Führungsbuchse (13) des Führungsbuchsenträgers (12) auf das zu bearbeitende Werkstück (7) aufgesetzt wird, so dass das Werkstück (7) zwischen der Werkzeugspindel (3) und einem Werkzeug (9) von der Führungsbuchse (13) geführt ist;
• Ausrichtung der Wirbel-Dreh-Fräseinheit (8), welche eine Wirbeleinheit (15), eine Fräseinheit (16) und eine Dreheinheit (17) umfasst und anschließendes Bearbeiten des Werkstücks (7) mit der Wirbeleinheit (15) und/oder Fräseinheit (16) und/oder Dreheinheit (17).

12. Verfahren nach Anspruch 11,
**dadurch gekennzeichnet, dass** zur Herstellung
einer Schraube aus dem Werkstück (7) die folgenden Verfahrensschritte durchgeführt werden:
• Spitze der Schraube drehen
Ausrichtung der Wirbel-Dreh-Fräseinheit (8), wobei eine Fräseinheit (16) gegenüber dem Werkstück (7) in X-, Y- und Z- Achse ausgerichtet wird und anschließendes Bearbeiten des Werkstücks (7) mit der Fräseinheit (16);
• Schneide der Schraube fräsen
Ausrichtung der Wirbel-Dreh-Fräseinheit (8), wobei eine Wirbeleinheit (15) gegenüber dem Werkstück (7) in X-, Y- und Z- Achse ausgerichtet wird und anschließendes Bearbeiten des Werkstücks (7) mit der Wirbeleinheit (15);
• Gewinde der Schraube wirbeln
Ausrichtung der Wirbel-Dreh-Fräseinheit (8), wobei eine Dreheinheit (17) gegenüber dem Werkstück (7) in X-, Y- und Z- Achse ausgerichtet wird und anschließendes Bearbeiten des Werkstücks (7) mit der Dreheinheit (17).

13. Verfahren nach Anspruch 11 oder 12,
**dadurch gekennzeichnet, dass** der Führungsbuchsenträger (12) während der Bearbeitung des Werkstücks (7) mit der Wirbel-Dreh-Fräseinheit (8) parallel bewegt wird und das Werkstück (7) führt.

## Claims

1. A device for machining workpieces (7), suitable for interacting with a multi-spindle lathe (1), the device comprising at least one tool carrier (4) with at least two tool slides (5, 5", 5") which are arranged to be assigned to a rotatably mounted workpiece spindle (3) of the multi-spindle lathe (1), wherein workpieces (7) to be machined are arranged in the workpiece spindles (3), **characterised in that** on a first tool slide (5, 5'), at least one swivelling-turning-milling unit (8) is provided, which comprises a swivelling unit (15), a milling unit (16) and a turning unit (17), and on the second tool slide (5, 5'), at least one guide bush carrier (12) with at least one separate guide bush (13) is provided, and **in that** the guide bush carrier (12) is adapted to guide the workpiece (7) during machining with the swivelling-turning-milling unit (8).

2. The device according to claim 1, **characterised in that** the swivelling-turning-milling unit (8) comprises a housing (9) on which the swivelling unit (15), the milling unit (16) and the turning unit (17) are arranged.

3. The device according to claim 1 or 2, **characterised in that** the separate guide bush (13) is detachably mounted on the guide bush carrier (12), wherein, when a workpiece (7) is being machined, the guide bush (13) is adapted to the diameter of the workpiece (7) to be machined.

4. The device according to any one of claims 1 to 3, **characterised in that** the swivelling-turning-milling unit (8) comprises a U-shaped housing (10) with two spaced-apart legs (20, 21), wherein the swivelling unit (15) is arranged on the first leg (20) and the milling unit (16) and the turning unit (17) are arranged on the second leg (21).

5. The device according to any one of claims 1 to 4, **characterised in that** the swivelling-turning-milling unit (8) comprises a housing (10) with a motor side (23) and a gearbox side (24) spaced apart therefrom, wherein a power transmission to the gearbox side is established via a gearbox mechanism starting from the motor side (23).

6. The device according to any one of claims 1 to 5, **characterised in that** a coolant is applied to the guide bush (13), as a result of which the workpiece (7) can be guided hydrostatically within the guide bush (13).

7. The device according to any one of claims 1 to 6, **characterised in that** the guide bush carrier (12) comprises an external pressure supply which forces a liquid lubricant at constant pressure into the guide bush (13) via inlet channels, thereby allowing a thin lubricating film to form between the guide bush (13) and the workpiece (7).

8. The device according to any one of claims 1 to 7, **characterised in that** the shape of the guide bush carrier (12), when used with the multi-spindle lathe, is adapted to the shape of a collet (14) of the workpiece spindle (3).

9. The device according to any one of claims 1 to 8, **characterised in that** the first tool slide (5, 5') and the second tool slide (5, 5") can be arranged in a V-shape, with the point of intersection aligned in the direction of the centre of the workpiece spindle (3) of the multi-spindle lathe (1).

10. The device according to any one of claims 1 to 9, **characterised in that** the tool slides (5, 5', 5") can be moved in the X and Z axes relative to the swivelling-turning-milling unit (8) and the guide bush carrier (12), and **in that**, when the swivelling-turning-milling unit (8) moves in the Z-direction, the guide bush carriers (12) move simultaneously or in parallel, and at a predefined distance, also in the Z-direction.

11. A method for machining at least one workpiece (7) using a multi-spindle lathe (1) which comprises at least one tool spindle (3) and at least two tool slides (5, 5', 5"), which are arranged in a V-shape relative to the tool spindle (5), wherein a swivelling-turning-milling unit (8) is arranged on one tool slide (5, 5') and a guide bush carrier (12) is arranged on the other tool slide (5, 5"), wherein the following process steps are carried out:
• positioning at least one workpiece (7) in the workpiece spindle (3) of the multi-spindle lathe (1);
• positioning the guide bush carrier (12) opposite the workpiece (7), whereby a guide bush (13) of the guide bush carrier (12) is fitted onto the workpiece (7) to be machined, such that the workpiece (7) is guided between the tool spindle (3) and a tool by the guide bush (13);
• aligning the swivelling-turning-milling unit (8), which comprises a swivelling unit (15), a milling unit (16) and a turning unit (17), and subsequently machining the workpiece (7) using the swivelling unit (15) and/or milling unit (16) and/or turning unit (17).

12. The method according to claim 11, **characterised in that**, to produce a screw from the workpiece (7), the following process steps are carried out:
• turning the tip of the screw
aligning the swivelling-turning-milling unit (8), wherein a milling unit (16) is aligned with respect to the workpiece (7) along the X, Y and Z axes, followed by machining of the workpiece (7) using the milling unit (16);
• milling the cutting edge of the screw
aligning the swivelling-turning-milling unit (8), wherein a swivelling unit (15) is aligned with respect to the workpiece (7) along the X, Y and Z axes, followed by machining of the workpiece (7) using the swivelling unit (15);
• swivelling the thread of the screw
aligning the swivelling-turning-milling unit (8), wherein a turning unit (17) is aligned with respect to the workpiece (7) in the X, Y and Z axes, followed by machining of the workpiece (7) using the turning unit (17).

13. The method according to claim 11 or 12, **characterised in that** the guide bush carrier (12) is moved in parallel whilst the workpiece (7) is being machined by the swivelling-turning-milling unit (8) and guides the workpiece (7).

## Revendications

1. Dispositif pour l'usinage de pièces (7) qui est adapté pour coopérer avec un tour multibroche (1), dans lequel le dispositif comprend au moins un porte-outil (4) comprenant au moins deux chariots porte-outil (5, 5', 5") qui sont configurés pour être affectés à une broche porte-pièce (3) montée en rotation du tour multibroche (1), dans lequel des pièces (7) à usiner sont disposées dans les broches porte-pièce (3), **caractérisé en ce qu'**au moins une unité de tourbillonnage-tournage-fraisage (8), qui comprend une unité de tourbillonnage (15), une unité de fraisage (16) et une unité de tournage (17), est disposée sur un premier chariot porte-outil (5, 5'), et qu'au moins un support de douille de guidage (12), comprenant au moins une douille de guidage (13) séparée, est disposé sur le second chariot porte-outil (5, 5'), et que le support de douille de guidage (12) est configuré pour guider la pièce (7) pendant l'usinage avec l'unité de tourbillonnage-tournage-fraisage (8).

2. Dispositif selon la revendication 1, **caractérisé en ce que** l'unité de tourbillonnage-tournage-fraisage (8) comprend un boîtier (9) sur lequel sont disposées l'unité de tourbillonnage (15), l'unité de fraisage (16) et l'unité de tournage (17).

3. Dispositif selon la revendication 1 ou 2, **caractérisé en ce que** la douille de guidage (13) séparée est disposée de manière détachable sur le support de douille de guidage (12), dans lequel la douille de guidage (13) est adaptée au diamètre de la pièce (7) à usiner lorsqu'une pièce (7) est usinée.

4. Dispositif selon l'une des revendications 1 à 3, **caractérisé en ce que** l'unité de tourbillonnage-tournage-fraisage (8) présente un boîtier (10) en forme de U comprenant deux pattes (20, 21) espacées, dans lequel l'unité de tourbillonnage (15) est disposée sur la première patte (20) et l'unité de fraisage (16) et l'unité de tournage (17) sont disposées sur la seconde patte (21).

5. Dispositif selon l'une des revendications 1 à 4, **caractérisé en ce que** l'unité de tourbillonnage-tournage-fraisage (8) présente un boîtier (10) présentant un côté moteur (23) et un côté engrenage (24) espacé de celui-ci, dans lequel une transmission de force depuis le côté moteur (23) au côté engrenage est produite par l'intermédiaire d'un dispositif d'engrenage.

6. Dispositif selon l'une des revendications 1 à 5, **caractérisé en ce que** la douille de guidage (13) est sollicitée avec un liquide de refroidissement, moyennant quoi la pièce (7) est guidée hydrostatiquement à l'intérieur de la douille de guidage (13).

7. Dispositif selon l'une des revendications 1 à 6, **caractérisé en ce que** le support de douille de guidage (12) présente une alimentation en pression externe qui presse un lubrifiant liquide avec une pression constante dans la douille de guidage (13) par l'intermédiaire de canaux d'admission, moyennant quoi un mince film lubrifiant peut se former entre la douille de guidage (13) et la pièce (7).

8. Dispositif selon l'une des revendications 1 à 7, **caractérisé en ce que** la forme du support de douille de guidage (12) est adaptée à la forme d'une pince de serrage (14) de la broche porte-pièce (3) lorsqu'il est utilisé avec le tour multibroche.

9. Dispositif selon l'une des revendications 1 à 8, **caractérisé en ce que** le premier chariot porte-outil (5, 5') et le second chariot porte-outil (5, 5") peuvent être disposés en forme de V, dans lequel le point d'intersection est orienté en direction du centre de la broche porte-pièce (3) du tour multibroche (1).

10. Dispositif selon l'une des revendications 1 à 9, **caractérisé en ce que** les chariots porte-outil (5, 5', 5") sont mobiles avec l'unité de tourbillonnage-tournage-fraisage (8) et avec le support de douille de guidage (12) sur les axes X et Z et lors d'un mouvement de l'unité de tourbillonnage-tournage-fraisage (8) dans la direction Z le support de douille de guidage (12) se déplace également dans la direction Z simultanément ou parallèlement et avec une distance prédéfinie.

11. Procédé d'usinage d'au moins une pièce (7) avec un tour multibroche (1) qui présente au moins une broche porte-outil (3) et au moins deux chariots porte-outil (5, 5', 5") qui sont disposés en forme de V par rapport à la broche porte-outil (5), dans lequel une unité de tourbillonnage-tournage-fraisage (8) est disposée sur l'un des chariots porte-outil (5, 5) et un support de douille de guidage (12) sur l'autre chariot porte-outil (5, 5"), dans lequel les étapes de procédé suivantes sont mises en œuvre :
• disposer au moins une pièce (7) dans la broche porte-pièce (3) du tour multibroche (1) ;
• positionner le support de douille de guidage (12) par rapport à la pièce (7),
dans lequel une douille de guidage (13) du support de douille de guidage (12) est placée sur la pièce (7) à usiner de telle sorte que la pièce (7) soit guidée entre la broche porte-outil (3) et un outil (9) par la douille de guidage (13) ;
• orienter l'unité de tourbillonnage-tournage-fraisage (8), qui comprend une unité de tourbillonnage (15), une unité de fraisage (16) et une unité de tournage (17), puis usiner la pièce (7) avec l'unité de tourbillonnage (15) et/ou l'unité de fraisage (16) et/ou l'unité de tournage (17).

12. Procédé selon la revendication 11, **caractérisé en ce que** les étapes de procédé suivantes sont réalisées pour fabriquer une vis à partir de la pièce (7) :
• tourner la pointe de la vis
orienter l'unité de tourbillonnage-tournage-fraisage (8), dans lequel une unité de fraisage (16) est orientée par rapport à la pièce (7) sur les axes X, Y et Z, puis usiner la pièce (7) avec l'unité de fraisage (16) ;
• fraiser le tranchant de la vis
orienter l'unité de tourbillonnage-tournage-fraisage (8), dans lequel une unité de tourbillonnage (15) est orientée par rapport à la pièce à usiner (7) sur les axes X, Y et Z, puis usinage de la pièce (7) avec l'unité de tourbillonnage (15) ;
• tourbillonner les filets de la vis
orienter l'unité de tourbillonnage-fraisage-tournage (8), dans lequel une unité de tournage (17) est orientée par rapport à la pièce (7) sur les axes X, Y et Z, puis usinage de la pièce (7) avec l'unité de tournage (17).

13. Procédé selon la revendication 11 ou 12, **caractérisé en ce que** le support de douille de guidage (12) est déplacé parallèlement avec l'unité de tourbillonnage-tournage-fraisage (8) pendant l'usinage de la pièce (7) et guide la pièce (7).
